# EUROPEAN PATENT APPLICATION

(11) **EP 4 303 829 A1**
(43) Date of publication of application: **10.01.2024**
(21) Application number: 23183601.6
(22) Date of filing: 05.07.2023
(51) Int. Cl.: G06V 20/40, G06V 20/52

(54) **VIDEO ANALYSIS APPARATUS, VIDEO ANALYSIS METHOD, AND PROGRAM**

(30) Priority: 05.07.2022 JP 2022108648
(71) Applicant: NEC Corporation, 108-8001 Tokyo (JP)
(72) Inventor: LIU, Jianquan, Tokyo, 108-8001 (JP); YOSHIDA, Noboru, Tokyo, 108-8001 (JP); DONG, Tingting, Tokyo, 108-8001 (JP); KAWAI, Ryo, Tokyo, 108-8001 (JP); YAMAZAKI, Satoshi, Tokyo, 108-8001 (JP); STEPHEN, Karen, Tokyo, 108-8001 (JP); NAMIKI, Yuta, Tokyo, 108-8001 (JP); SHINDOU, Naoki, Tokyo, 108-8001 (JP); SASAKI, Youhei, Tokyo, 108-8001 (JP)
(74) Representative: MacDougall, Alan John Shaw

(57) **Abstract**

To utilize results of analyzing a plurality of videos, a video analysis apparatus 100 includes a type receiving unit 110, an acquiring unit 111, and an integration unit 112. The type receiving unit 110 accepts selection of a type of engine in order to analyze each of a plurality of videos and detect a detection target included in each of the plurality of videos. The acquiring unit 111 acquires results of analyzing the plurality of videos by using the selected type of engine among results of analyzing the plurality of videos by using a plurality of types of the engines. The integration unit 112 integrates the acquired results of analyzing the plurality of videos.

## Description

### RELATED ART

The present invention relates to a video analysis apparatus, a video analysis method, and a program.

PTL 1 (Japanese Patent Application Publication No. 2020-184292) discloses a dispersion-type target tracking system for tracking a target by connecting results of analyzing acquired by an image analyzing apparatus. The dispersion-type target tracking system includes a plurality of image analyzing apparatuses and a cluster management service apparatus.

Each of the plurality of image analyzing apparatuses described in PTL 1 is connected to at least one related camera apparatus, analyzes an object in at least one related real-time video stream being transmitted from the at least one related camera apparatus, and generates an analyzing result of the object. PTL 1 discloses that the object includes a person or a suitcase, and the analyzing result includes characteristics of a person's face or a suitcase.

The cluster management service apparatus according to PTL 1 is a cluster management service apparatus being connected to a plurality of image analyzing apparatuses and concatenates the analyzing results generated by the plurality of image analyzing apparatuses in order to generate a trajectory of the object.

Also, PTL 2 (International Patent Publication No. WO2021/084677) describes a technique of computing a feature value for each of a plurality of key points of a human body included in an image and, based on the computed feature values, searching for an image containing a human body with a similar pose or similar behavior, and grouping and classifying a human body with the similar pose or behavior. In addition, NPL 1 (Zhe Cao, Tomas Simon, Shih-En Wei, Yaser Sheikh, [Realtime Multi-Person 2D Pose Estimation using Part Affinity Fields]; The IEEE Conference on Computer Vision and Pattern Recognition (CVPR), 2017, pp. 7291-7299) describes a technique related to a skeletal estimation of a person.

### SUMMARY

In general, analyzing a video allows detection of various feature values related to appearance of a detection target without limiting to characteristics of a human face or characteristics of a suitcase.

According to the dispersion-type target tracking system described in PTL 1, even though a target in a real-time video stream can be tracked, it is difficult to utilize results of analyzing a plurality of videos for other purposes than tracking the target.

Note that neither PTL 2 nor NPL 1 discloses a technique of utilizing results of analyzing a plurality of videos.

In view of the above-mentioned problem, one example of an object of an embodiment of the present invention is to provide a video analysis apparatus, a video analysis method, a program and the like that give a solution for utilizing results of analyzing a plurality of videos.

According to one aspect of the present invention, provided is a video analysis apparatus including: a type receiving means for accepting selection of a type of engine in order to analyze each of a plurality of videos and detect a detection target included in each of the plurality of videos; an acquiring means for acquiring results of analyzing the plurality of videos by using the selected type of the engine among results of analyzing the plurality of videos by using a plurality of types of the engines; and an integration means for integrating the acquired results of analyzing the plurality of videos.

According to one aspect of the present invention, provided is a video analysis method including, by a computer: accepting selection of a type of engine in order to analyze each of a plurality of videos and detect a detection target included in each of the plurality of videos; acquiring results of analyzing the plurality of videos by using the selected type of the engine among results of analyzing the plurality of videos by using a plurality of types of the engines; and integrating the acquired results of analyzing the plurality of videos.

According to one aspect of the present invention, provided is a program for causing a computer to perform: accepting selection of a type of engine in order to analyze each of a plurality of videos and detect a detection target included in each of the plurality of videos; acquiring results of analyzing the plurality of videos by using the selected type of the engine among results of analyzing the plurality of videos by using the plurality of types of the engines; and integrating the acquired results of analyzing the plurality of videos.

According to one aspect of the present invention, it is possible to utilize results of analyzing a plurality of videos.

### BRIEF DESCRIPTION OF THE DRAWINGS

Fig. 1 is a diagram illustrating an overview of a video analysis apparatus according to an example embodiment;
Fig. 2 is a diagram illustrating an overview of a video analysis system according to the example embodiment;
Fig. 3 is a flowchart illustrating an example of video analysis processing according to the example embodiment;
Fig. 4 is a diagram illustrating a detailed example of the configuration of a video analysis system according to the example embodiment;
Fig. 5 is a diagram illustrating a configuration example of video information according to the example embodiment;
Fig. 6 is a diagram illustrating a configuration example of analyzing information according to the example embodiment;
Fig. 7 is a diagram illustrating a detailed example of the functional configuration of a video analysis apparatus according to the example embodiment;
Fig. 8 is a diagram illustrating a configuration example of integration information according to the example embodiment;
Fig. 9 is a diagram illustrating an example of the physical configuration of a video analysis apparatus according to the example embodiment;
Fig. 10 is a flowchart illustrating an example of analyzing processing according to the example embodiment;
Fig. 11 illustrates an example of a start screen according to the example embodiment;
Fig. 12 is a flowchart illustrating a detailed example of integration processing according to the example embodiment;
Fig. 13 is a diagram illustrating an example of an integration result screen according to the example embodiment; and
Fig. 14 is a diagram illustrating an example of an occurrence count display screen according to the example embodiment.

### DETAILED DESCRIPTION

The following describes an example embodiment of the present invention with reference to the drawings. Note that in all the drawings like components are given like signs and descriptions of such components are omitted as appropriate.

### (Example embodiment)

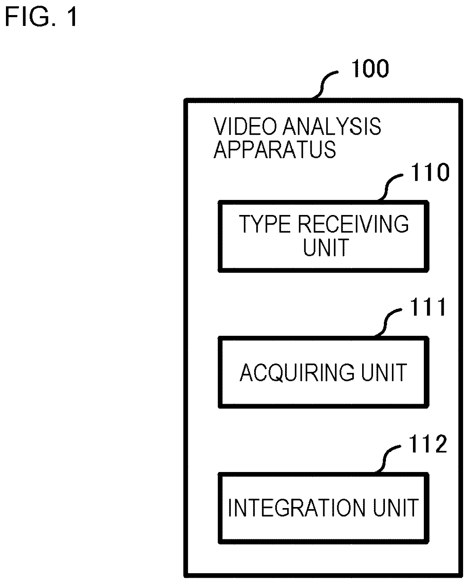

Fig. 1 is a diagram illustrating an overview of a video analysis apparatus 100 according to an example embodiment. The video analysis apparatus 100 includes a type receiving unit 110, an acquiring unit 111, and an integration unit 112.

The type receiving unit 110 accepts a selection of the type of engine for analyzing each of a plurality of videos in order to detect a detection target included in each of the plurality of videos. The acquiring unit 111 acquires results of analyzing the plurality of videos by using the selected type of engine among results of analyzing the plurality of videos by using a plurality of types of engines. The integration unit 112 integrates the acquired results of analyzing the plurality of videos.

This video analysis apparatus 100 allows utilization of the results of analyzing a plurality of videos.

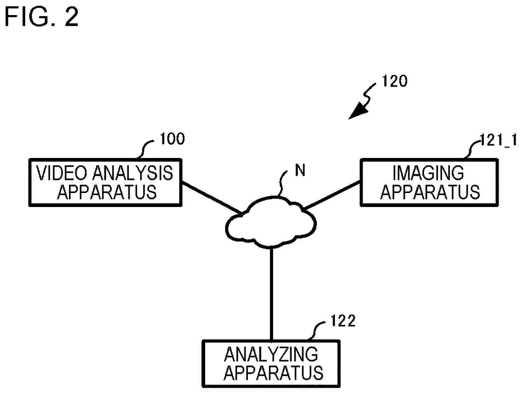

Fig. 2 is a diagram illustrating an overview of a video analysis system 120 according to the example embodiment. The video analysis system 120 includes the video analysis apparatus 100, a plurality of imaging apparatuses 121_1 to 121_K, and an analyzing apparatus 122. Here, K is an integer equal to or more than 2; the same applies hereinafter.

The plurality of imaging apparatuses 121_1 to 121_K are apparatuses for shooting a plurality of videos. The analyzing apparatus 122 analyzes each of the plurality of videos by using a plurality of types of engines.

The video analysis system 120 allows utilization of the results of analyzing a plurality of videos.

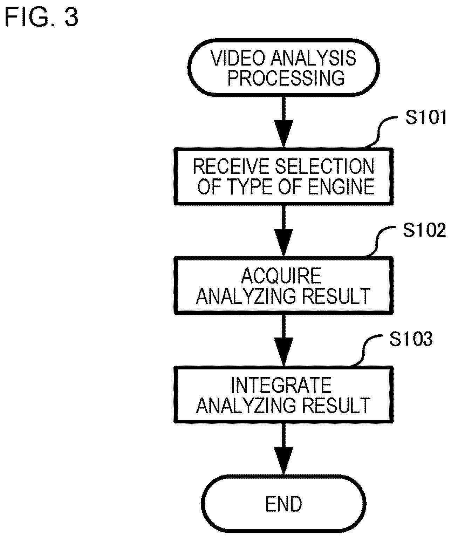

Fig. 3 is a flowchart illustrating an example of video analysis processing according to the example embodiment.

The type receiving unit 110 accepts a selection of the type of engine for analyzing each of a plurality of videos in order to detect a detection target included in each of the plurality of videos (step S101).

The acquiring unit 111 acquires results of analyzing the plurality of videos by using the selected type of engine among results of analyzing the plurality of videos by using a plurality of types of engines (step S102).

The integration unit 112 integrates the acquired results of analyzing the plurality of videos (step S103).

This video analysis processing allows utilization of the results of analyzing a plurality of videos.

The following describes a detailed example of the video analysis system 120 according to the example embodiment.

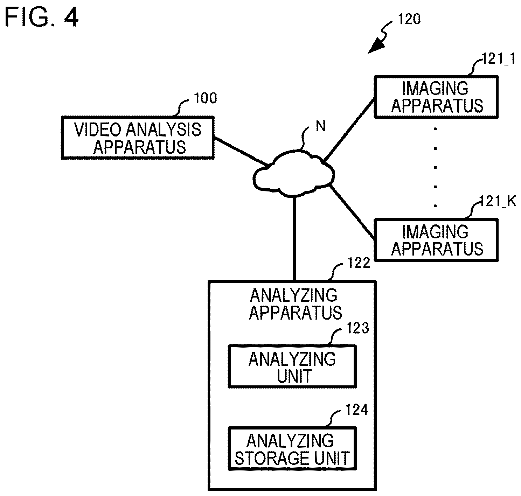

Fig. 4 is a diagram illustrating a detailed example of the configuration of the video analysis system 120 according to the present example embodiment.

The video analysis system 120 includes the video analysis apparatus 100, the K number of imaging apparatuses 121_1 to 121_K, and the analyzing apparatus 122.

The video analysis apparatus 100, each of the imaging apparatuses 121_1 to 121_K, and the analyzing apparatus 122 are connected to each other via a communication network N that is configured by a wired means, a wireless means, or a combination thereof. The video analysis apparatus 100, each of the imaging apparatuses 121_1 to 121_K, and the analyzing apparatus 122 transmit and receive information to and from each other via the communication network N.

### (Configuration of imaging apparatuses 121_1 to 121_K)

Each of the imaging apparatuses 121_1 to 121_K is an apparatus for shooting a video.

Each of the imaging apparatuses 121_1 to 121_K is, for example, a camera that is installed to shoot a predetermined shooting area within a predetermined range. The predetermined range may be a building, a facility, a municipality, a prefecture, and/or the like or may be a range appropriately defined therein. The shooting areas of the imaging apparatuses 121_1 to 121_K may be areas that are partially overlapping with one another or may be areas that are separate from one another.

The imaging apparatus 121_i, for example, shoots a predetermined shooting area at a predetermined frame rate. By shooting the predetermined shooting area, the imaging apparatus 121_i generates video information 124a_i including a video. The video is constituted by a plurality of frame images in a time series. Here, i is an integer equal to or more than 1 or less than K; the same applies hereinafter. That is, the imaging apparatus 121_i refers to any one of the imaging apparatuses 121_1 to 121_K.

The imaging apparatus 121_i transmits video information 124a_i indicating a shot video to the analyzing apparatus 122 via the communication network N. The timing at which the imaging apparatus 121_i transmits the video information 124a_i to the analyzing apparatus 122 varies. For example, the imaging apparatus 121_i may individually transmit the video information 124a_i to the analyzing apparatus 122 or may transmit the video information 124a_i to the analyzing apparatus 122 in bulk at a predetermined time (for example, a predetermined time of day).

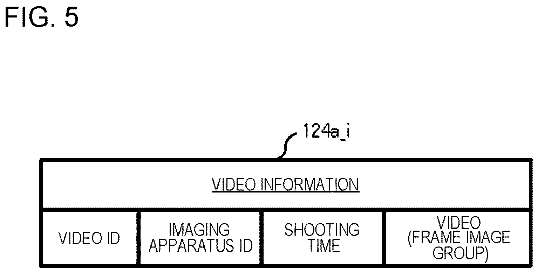

Fig. 5 is a diagram illustrating a configuration example of the video information 124a_i. The video information 124a_i is information including a video constituted by a plurality of frame images. Specifically, for example, as illustrated in Fig. 5, the video information 124a_i associates a video ID, an imaging apparatus ID, a shooting time, and a video (a group of frame images).

The video ID is information for identifying each of a plurality of videos (video identification information). The imaging apparatus ID is information for identifying each of the imaging apparatuses 121_1 to 121_K (imaging identification information). The shooting time is information indicating the time during which the video is shot. The shooting time may include, for example, a start timing and an end timing of shooting. The shooting time may further include a frame shooting timing at which each frame image is shot. The start timing, the end timing, and the frame shooting timing may each be configured by a date and a time, for example.

In the video information 124a_i, a video ID is associated with a video that is identified by the video ID. Furthermore, in the video information 124a_i, the video ID is associated with the imaging apparatus ID of an imaging apparatus 121_i that shot the video identified by using the video ID and a shooting time (a start timing, an end timing) indicating a time during which the video identified by using the video ID is shot. Furthermore, in the video information 124a_i, the video ID is associated with each of the frame images that constitute the video identified by the video ID and a shooting time (a frame shooting timing).

### (Functions of the analyzing apparatus 122)

The analyzing apparatus 122 analyzes a plurality of videos shot by the imaging apparatuses 121_1 to 121_K by analyzing each of the frame images shot by each of the imaging apparatuses 121_1 to 121_K. The analyzing apparatus 122 includes an analyzing unit 123 and an analyzing storage unit 124, as illustrated in Fig. 4.

The analyzing unit 123 acquires the video information 124a_1 to 124a_K from the imaging apparatuses 121_1 to 121_K and causes the analyzing storage unit 124 to store the acquired plurality of pieces of video information 124a_1 to 124a_K. The analyzing unit 123 analyzes a plurality of videos included in the acquired plurality of pieces of video information 124a_1 to 124a_K. Specifically, for example, the analyzing unit 123 analyzes a plurality of frame images included in each of the plurality of pieces of video information 124a_1 to 124a_K.

The analyzing unit 123 generates analyzing information 124b indicating the results of analyzing the plurality of videos and causes the analyzing storage unit 124 to store the information. In addition, the analyzing unit 123 transmits the plurality of pieces of video information 124a_1 to 124a_K and the analyzing information 124b to the video analysis apparatus 100 via the communication network N.

The analyzing unit 123 has a function of analyzing an image by using a plurality of types of engines. The various types of engines have a function of analyzing an image and detecting a detection target included in the image. In other words, the analyzing unit 123 according to the present example embodiment analyzes frame images (that is, a video) included in each piece of the video information 124a_1 to 124a_K by using a plurality of types of engines and generates the analyzing information 124b.

The detection target according to the present example embodiment is a person. Note that the detection target may be a predetermined object such as a car or a bag.

Examples of types of engines include (1) an object detection engine, (2) a face analyzing engine, (3) a human-shape analyzing engine, (4) a pose analyzing engine, (5) a behavior analyzing engine, (6) an appearance attribute analyzing engine, (7) a gradient feature analyzing engine, (8) a color feature analyzing engine, and (9) a flow line analyzing engine. Note that the analyzing apparatus 122 may include at least two engines of the types of engines exemplified above and other types of engines.
(1) The object detection engine detects a person and an object in an image. The object detection function can also compute the position of a person and/or an object in an image. A model applicable to the object detection processing is, for example, you only look once (YOLO).
(2) The face analyzing engine detects a human face in an image, extracts a feature value from the detected face (a facial feature value), classifies the detected face (classification) and/or performs other processing. The face analyzing engine can also compute the position of a face in an image. The face analyzing engine can also determine the identicality of persons detected from different images based on a similarity of the facial feature values of the persons detected from the different images.
(3) The human-shape analyzing engine extracts a human body feature values of a person included in an image (for example, a value indicating overall characteristics, such as body slimness, height, and clothing), classifies the person included in the image (classification), and/or performs other processing. The human-shape analyzing engine can also locate the position of a person in an image. The human-shape analyzing engine can also determine the identicality of persons included in different images based on the human body feature values and/or the like of the persons included in the different images.
(4) The pose analyzing engine generates pose information that indicates a pose of a person. The pose information includes, for example, a pose estimation model of a person. The pose estimation model is a model that links the joints of a person estimated from an image. The pose estimation model includes a plurality of model elements related to, for example, a joint element relevant to a j oint, a trunk element relevant to a torso, a bone element relevant to a bone connecting between joints, and/or the like. The pose analyzing function creates a pose estimation model, for example, by detecting joint points of a person from an image and connecting the joint points.
   Then, the pose analyzing engine uses the information of the pose estimation model in order to estimate the pose of a person, extracts an estimated pose feature value (a pose feature value), classifies the person included in the image (classification), and/or performs other processing. The pose analyzing engine can also determine the identicality of persons included in different images based on the pose feature values and/or the like of the persons included in the different images.
   For example, the techniques disclosed in PTL 2 and NPL 1 are applicable to the pose analyzing engine.
(5) The behavior analyzing engine can use information of a pose estimation model, a change in pose, and/or the like in order to estimate a motion of a person, extract a feature value of the motion of the person (a motion feature value), classify the person included in the image (classification), and/or perform other processing. The behavior analyzing engine can also use information of a stick-human model in order to estimate the height of a person and locate the position of the person in an image. The behavior analyzing engine can, for example, estimate a behavior such as a change or transition in pose or a movement (a change or transition in position) from an image, and extract the motion feature values related to the behavior.
(6) The appearance attribute analyzing engine can recognize an appearance attribute pertaining to a person. The appearance attribute analyzing engine extracts a feature value related to a recognized appearance attribute (an appearance attribute feature value), classifies the person included in the image (classification), and/or performs other processing. The appearance attribute is an attribute in terms of appearance and includes, for example, one or more of the following: the color of clothing, the color of shoes, a hairstyle, and wearing or not wearing a hat, a tie, glasses, and the like.
(7) The gradient feature analyzing engine extracts a feature value of a gradient in an image (a gradient feature value). For example, techniques such as SIFT, SURF, RIFF, ORB, BRISK, CARD, and HOG, are applicable to the gradient feature analyzing engine.
(8) The color feature analyzing engine can detect an object from an image, extract a feature value of a color of the detected object (a color feature value), classify the detected object (classification), and/or perform other processing. The color feature value is, for example, a color histogram. The color feature analyzing engine can, for example, detect a person or an object included in an image.
(9) The flow line analyzing engine can, for example, use the result of the identicality determination made by any one or a plurality of the engines described above in order to compute the flow line (a movement trajectory) of a person included in the video. Specifically, for example, the flow line of a person can be determined by connecting, for example, persons who have been determined to be identical in different images in a time series. For example, the flow line analyzing engine can compute a movement feature value indicating the direction of movement and the velocity of the movement of a person. The movement feature value may be any one of the direction of movement and the velocity of the movement of a person.

When the flow line analyzing engine acquires videos shot by a plurality of imaging apparatuses 121_2 to 121_K that shot different shooting areas, the flow line analyzing engine can also compute a flow line spanning between the plurality of images created by shooting the different shooting areas.

The engines (1) to (9) can also compute a reliability for the feature value that each engine has computed.

In addition, each of the engines (1) to (9) may use the result of analyzing performed by other engines as appropriate. The video analysis apparatus 100 may be equipped with an analyzing unit that has the function of the analyzing apparatus 122.

The analyzing storage unit 124 is a storage unit for storing various kinds of information, such as video information 124a_1 to 124a_K and analyzing information 124b.

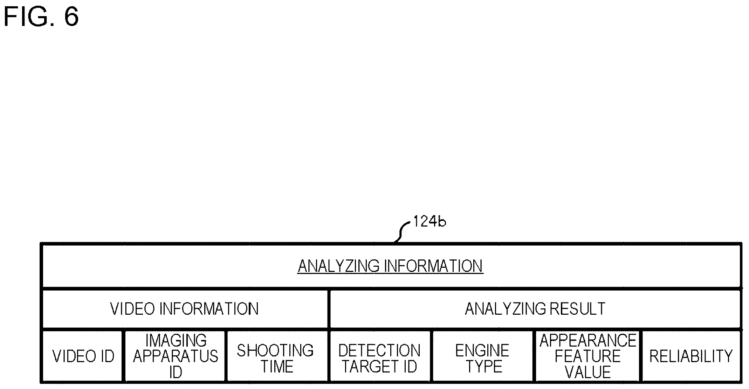

Fig. 6 is a diagram illustrating a configuration example of the analyzing information 124b. The analyzing information 124b associates a video ID, an imaging apparatus ID, a shooting time, and an analyzing result.

The video ID, the imaging apparatus ID, and the shooting time that are associated in the analyzing information 124b are similar to the video ID, the imaging apparatus ID, and the shooting time that are associated in the video information 124a_i, respectively.

The analyzing result is information indicating a result of analyzing a video that is identified by using a video ID associated with the analyzing result. In the analyzing information 124b, the analyzing result is associated with a video ID for identifying the video that is analyzed in order to acquire the analyzing result.

The analyzing result associates, for example, a detection target ID, an engine type, an appearance feature value, and a reliability.

The detection target ID is information for identifying a detection target (detection target identification information). In the present example embodiment, as described above, the detection target is a person. Thus, the detection target ID is information for identifying a person detected by analyzing each of the plurality of frame images by the analyzing apparatus 122. The detection target ID according to the present example embodiment is information for identifying each image indicating a person (a human image) detected from each of a plurality of frame images, regardless of whether the detection target is the same person or not.

Note that the detection target ID may be information for identifying each person indicated by a human image detected from each of a plurality of frame images. In this case, the same detection target ID is assigned when a detection target is the same person, and a different detection target ID is assigned when a detection target is a different person.

In the analyzing information 124b, the detection target ID is information for identifying a detection target included in a video that is identified by the video ID associated with the detection target ID.

The engine type indicates the type of engine that is used for analyzing a video.

The appearance feature value indicates a feature value pertaining to the appearance of a detection target. The appearance feature value is, for example, a result of detecting an object by the object detection function, a facial feature value, a human body feature value, a pose feature value, a motion feature value, an appearance attribute feature value, a gradient feature value, a color feature value, and/or a movement feature value.

In the analyzing result of the analyzing information 124b, the appearance feature value indicates a feature value, of a detection target indicated by a detection target ID associated with the appearance feature value, computed by using the type of engine associated with the appearance feature value.

The reliability indicates the reliability of an appearance feature value. In the analyzing result of the analyzing information 124b, the reliability indicates the reliability of the appearance feature value associated with the analyzing result.

For example, when the analyzing apparatus 122 uses the engines (1) to (9) described above in order to compute an appearance feature value, the engine types indicating the types of engines (1) to (9) are associated with a common detection target ID in the analyzing result. Then, in the analyzing result, the appearance feature value that is computed by using the type of engine indicated by the engine type and the reliability of the appearance feature value are associated with each other for each engine type.

### (Functions of the video analysis apparatus 100)

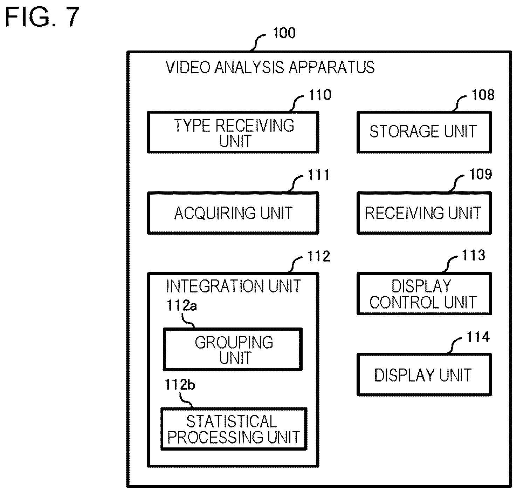

Fig. 7 is a diagram illustrating a detailed example of the functional configuration of the video analysis apparatus 100 according to the present example embodiment. The video analysis apparatus 100 includes a storage unit 108, a receiving unit 109, a type receiving unit 110, an acquiring unit 111, an integration unit 112, a display control unit 113, and a display unit 114. Note that the video analysis apparatus 100 may be equipped with an analyzing unit 123, and in such a case, the video analysis system 120 may not include an analyzing apparatus 122.

The storage unit 108 is a storage unit for storing various kinds of information.

The receiving unit 109 receives various kinds of information such as video information 124a_1 to 124a_K and analyzing information 124b from the analyzing apparatus 122 via the communication network N. The receiving unit 109 may receive the video information 124a_1 to 124a_K and the analyzing information 124b from the analyzing apparatus 122 in real time or may receive the video information 124a_1 to 124a_K and the analyzing information 124b as necessary, such as, when the information is used for processing in the video analysis apparatus 100.

The receiving unit 109 causes the storage unit 108 to store the received information. That is, in the present example embodiment, the information stored in the storage unit 108 includes video information 124a_1 to 124a_K and analyzing information 124b.

Note that the receiving unit 109 may receive the video information 124a_1 to 124a_K from the imaging apparatuses 121_1 to 121_K via the communication network N and cause the storage unit 108 to store the received information. The receiving unit 109 may also receive the video information 124a_1 to 124a_K and the analyzing information 124b from the analyzing apparatus 122 via the communication network N as necessary, such as, when the information is used for processing in the video analysis apparatus 100. In this case, the video information 124a_1 to 124a_K and the analyzing information 124b may not be stored in the storage unit 108. Furthermore, for example, when the receiving unit 109 receives all of the video information 124a_1 to 124a_K and the analyzing information 124b from the analyzing apparatus 122 and causes the storage unit 108 to store the information, the analyzing apparatus 122 may not need to retain the video information 124a_1 to 124a_K and the analyzing information 124b.

The type receiving unit 110 accepts, for example, from a user, a selection of the type of engine that is used by the analyzing apparatus 122 for analyzing a video. The type receiving unit 110 may receive one type of engine or a plurality of types of engines.

Specifically, for example, the type receiving unit 110 receives information indicating any type of (1) an object detection engine, (2) a face analyzing engine, (3) a human-shape analyzing engine, (4) a pose analyzing engine, (5) a behavior analyzing engine, (6) an appearance attribute analyzing engine, (7) a gradient feature analyzing engine, (8) a color feature analyzing engine, and (9) a flow line analyzing engine, and the like.

Note that the selection of the type of engine may be made by selecting a result of analyzing the plurality of videos. In this case, for example, the type receiving unit 110 may accept a selection of the result of analyzing the plurality of videos in order to determine the type of engine being used for acquiring the selected result.

Of the results of analyzing the plurality of videos by using the plurality of types of engines, the acquiring unit 111 acquires, from the storage unit 108, the analyzing information 124b indicating the results of analyzing the plurality of videos by using the selected type of engine, that is, the type of engine received by the type receiving unit 110. Note that the acquiring unit 111 may receive the analyzing information 124b from the analyzing apparatus 122 via the communication network N.

The results of analyzing the plurality of videos are information included in the analyzing information 124b. Thus, the results of analyzing the plurality of videos include, for example, an appearance feature value of a detection target included in the video. In addition, for example, the results of analyzing the plurality of videos include an imaging apparatus ID (imaging identification information) for identifying the imaging apparatus 121_1 to 121_K that shot a video including the detection target. Furthermore, for example, the results of analyzing the plurality of videos include a shooting time during which a video including the detection target is shot. The shooting time may include at least either a start timing and an end timing of the video including the detection target or a frame shooting timing of a frame image including the detection target.

Here, the plurality of videos subject to analyzing for generating the analyzing information 124b to be acquired by the acquiring unit 111 are locally and temporally related videos. In other words, in the present example embodiment, the plurality of videos are videos acquired by shooting a plurality of locations within a predetermined range at different times within a predetermined period of time (for example, one day, one week, or one month).

Note that the plurality of videos included in each of the plurality of pieces of video information 124a_1 to 124a_K are not limited to the locally and temporally related videos, as long as the plurality of videos are either locally or temporally related. In other words, the videos subject to analyzing for generating the analyzing information 124b to be acquired by the acquiring unit 111 may be videos acquired by shooting the same location at different times within a predetermined period of time or may be videos acquired by shooting a plurality of locations within a predetermined range at the same time.

The integration unit 112 integrates the analyzing results acquired by the acquiring unit 111. In other words, the integration unit 112 integrates the results of analyzing the plurality of videos by the selected type of engine, that is, the type of engine received by the type receiving unit 110. Specifically, for example, the integration unit 112 integrates the results of analyzing the plurality of videos by using the same type of engine.

Note that a plurality of types of engines may be selected, and in this case, the integration unit 112 may integrate, for each of the selected types of engines, the results of analyzing the plurality of videos by using the selected type of engine. That is, when a plurality of types of engines are selected, the integration unit 112 may integrate the results of analyzing the plurality of videos by using the same type of engine for each of the selected types of engines.

In the present example embodiment, the integration unit 112 integrates the analyzing results by grouping detection targets based on the appearance feature values of the detection targets being detected by the analyzing.

Specifically, for example, the integration unit 112 includes a grouping unit 112a and a statistical processing unit 112b, as illustrated in Fig. 7.

The grouping unit 112a groups detection targets included in the plurality of videos based on the similarity of the appearance feature values of the detection targets and generates integration information 108a that associates a detection target with a group to which the detection target belongs. The grouping unit 112a causes the storage unit 108 to store the generated integration information 108a.

More specifically, the grouping unit 112a accepts specification of a video to be integrated, based on, for example, a user input and/or a preset default value. The grouping unit 112a groups the detection targets detected by using the specified video based on the similarity of the appearance feature values of the detection targets.

The video to be integrated is specified, for example, by using a combination of the imaging apparatuses 121_1 to 121_K that shot a plurality of videos to be integrated and a shooting period during which the plurality of videos are shot. The shooting period is specified, for example, by a combination of a time range and a date. The grouping unit 112a determines a plurality of videos shot during a specified shooting period by specified imaging apparatuses 121_1 to 121_K and groups the detection targets included in the determined plurality of videos.

Note that the grouping unit 112a may group detection targets that are included in all the videos shot by all the imaging apparatuses 121_1 to 121_K. Alternatively, the grouping unit 112a may group detection targets that are included in all the videos shot by all the imaging apparatuses 121_1 to 121_K during a specified time range.

The grouping unit 112a acquires a grouping condition for grouping detection targets based on, for example, a user input and a preset default value. The grouping unit 112a retains the grouping condition. The grouping unit 112a groups detection targets included in a plurality of videos based on the grouping condition.

The grouping condition includes at least one of a first threshold related to the reliability of an appearance feature value, a second threshold related to the similarity of an appearance feature value, and the number of groups. Note that the grouping condition may include at least one of the first threshold, the second threshold, and the number of groups.

The grouping unit 112a may extract, for example, based on the grouping condition, a detection target associated with the appearance feature value having a reliability equal to or more than the first threshold. Then, the grouping unit 112a may group the extracted detection targets based on the appearance feature values.

In addition, for example, based on the grouping condition, the grouping unit 112a may group a detection target having a similarity of the appearance feature value equal to or more than the second threshold into the same group and group a detection target having a similarity of the appearance feature value less than the second threshold into a different group.

Further, for example, the grouping unit 112a may group detection targets in such a way that the number of groups into which the detection targets are grouped is the number of groups included in the grouping condition.

The grouping unit 112a may use a common grouping condition for grouping detection targets regardless of the user of the video analysis apparatus 100 or may use a grouping condition specified by a user from a plurality of grouping conditions for grouping detection targets.

The grouping unit 112a may retain a grouping condition in association with user identification information for identifying a user. In this case, the grouping unit 112a may use, for grouping detection targets, a grouping condition associated with the user identification information for identifying a logged-in user or a grouping condition associated with the user identification information entered by a user. In this way, the grouping unit 112a can group detection targets included in a plurality of videos based on the grouping condition determined for each user.

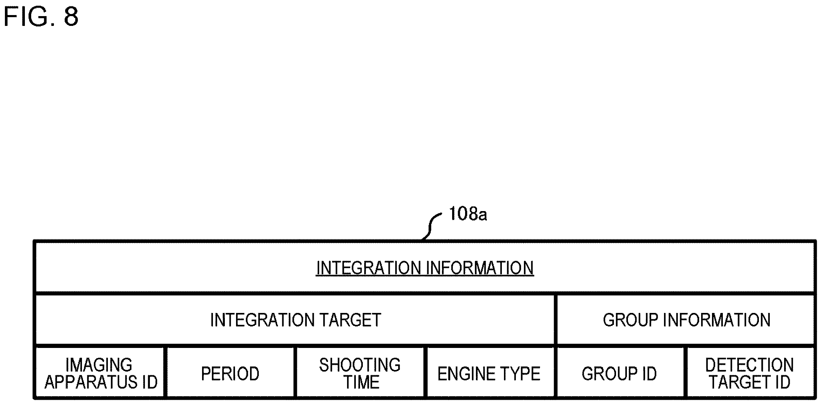

Fig. 8 is a diagram illustrating a configuration example of the integration information 108a. The integration information 108a associates, for example, an integration target and group information.

The integration target is information for determining a plurality of videos to be integrated. In the example illustrated in Fig. 8, the integration target associates an imaging apparatus ID, a shooting period, a shooting time, and an engine type.

The imaging apparatus ID and the shooting period are, respectively, imaging apparatuses 121_1 to 121_K and a shooting period that are specified for determining videos subject to specified integration. The shooting time is a shooting time during which a video is shot within the shooting period. The imaging apparatus ID and the shooting time included in the integration target can be used for linking an imaging apparatus ID and a shooting time included in video information 124a_i in order to determine a video ID and a video.

The engine type is information indicating the selected type of engine. In other words, the engine type indicates the type of engine being used for computing a feature value of a detection target detected from a plurality of screens to be integrated (analyzing of the plurality of screens).

The group information is information indicating the result of grouping and associates a group ID and a detection target ID. The group ID is information for identifying a group (group identification information). In the group information, the group ID is associated with the detection target ID of a detection target belonging to the group that is identified by using the group ID.

By using the integration information 108a, the statistical processing unit 112b counts the number of times a detection target is included in a plurality of videos in order to compute the number of occurrences of the detection target. Specifically, for example, the statistical processing unit 112b counts the number of times a detection target belonging to a group specified by a user is included, for example, in a plurality of videos shot by specified imaging apparatus 121_1 to 121_K during a shooting period by using the integration information 108a and computes the number of occurrences of the detection target belonging to the group.

The number of occurrences includes at least one of the total number of occurrences, the number of occurrences by time range, and the like.

The total number of occurrences is the number of occurrences acquired by counting the number of times a detection target belonging to a group specified by a user is included in all the plurality of videos being shot during a shooting period.

The number of occurrences by time range is the number of occurrences acquired by counting, for each time range divided from a shooting period, the number of times a detection target belonging to a group specified by a user is included in the plurality of videos being shot during the time range. This time range may be determined based on a predetermined length of time, for example, hourly, or may be specified by a user.

The display control unit 113 causes the display unit 114 to display various types of information. For example, the display control unit 113 causes the display unit 114 to display the result of integration by the integration unit 112. The result of the integration is, for example, a detection target in each group as a result of grouping, an imaging apparatus ID of the imaging apparatus 121_1 to 121_K that shot the video in which the detection target has been detected, a shooting time of the video in which the detection target has been detected, the number of occurrences of the detection target, and the like.

For example, when a time range is specified by a user, the display control unit 113 causes the display unit 114 to display one or a plurality of videos being shot during the specified time range.

### (Physical configuration of the video analysis apparatus 100)

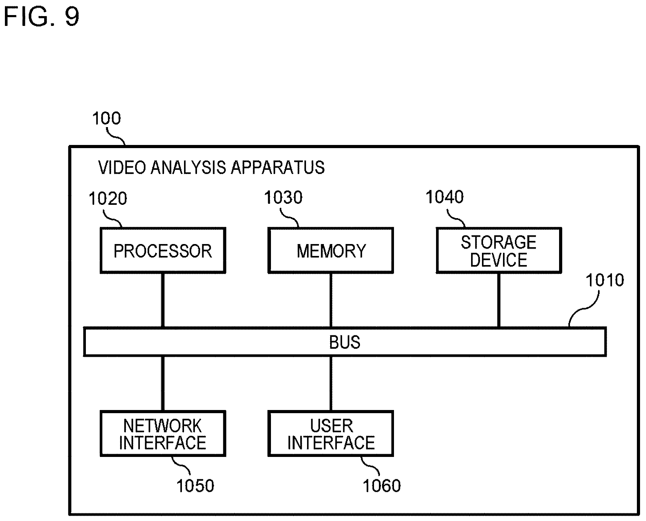

Fig. 9 is a diagram illustrating an example of the physical configuration of the video analysis apparatus 100 according to the present example embodiment. The video analysis apparatus 100 has a bus 1010, a processor 1020, a memory 1030, a storage device 1040, a network interface 1050, and a user interface 1060.

The bus 1010 is a data transmission path for the processor 1020, the memory 1030, the storage device 1040, the network interface 1050, and the user interface 1060 to transmit and receive data to and from each other. However, the method of connecting the processor 1020 and the like to each other is not limited to a bus connection.

The processor 1020 is a processor that is achieved by a central processing unit (CPU), a graphics processing unit (GPU), or the like.

The memory 1030 is a main storage apparatus that is achieved by a random access memory (RAM) or the like.

The storage device 1040 is an auxiliary storage apparatus that is achieved by a hard disk drive (HDD), a solid state drive (SSD), a memory card, a read only memory (ROM), or the like. The storage device 1040 stores a program module for achieving the functionality of the video analysis apparatus 100. When the processor 1020 loads and executes each program module on the memory 1030, a function provided by the program module is achieved.

The network interface 1050 is an interface for connecting the video analysis apparatus 100 to the communication network N.

The user interface 1060 is a touch panel, a keyboard, a mouse, and/or the like as an interface for a user to enter information, and a liquid crystal panel, an organic electro-luminescence (EL) panel, and/or the like as an interface for presenting information to the user.

The analyzing apparatus 122 may be configured in a physically similar manner to the video analysis apparatus 100 (refer to Fig. 9). Thus, a diagram illustrating the physical configuration of the analyzing apparatus 122 is omitted.

### (Operation of the video analysis system 120)

The following describes the operation of the video analysis system 120 with reference to the drawings.

### (Analyzing processing)

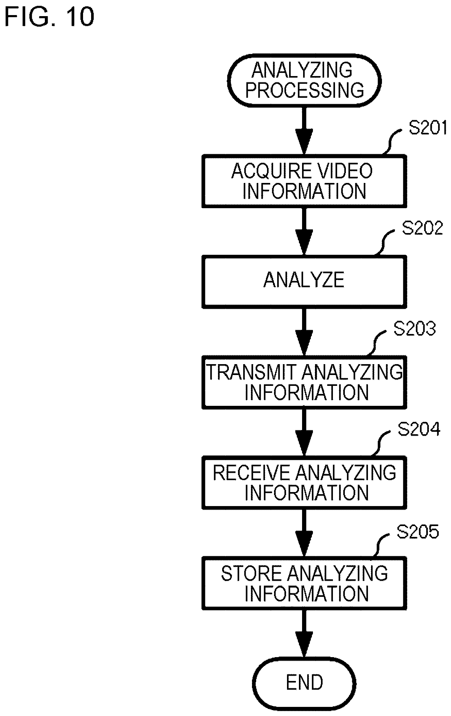

Fig. 10 is a flowchart illustrating an example of analyzing processing according to the present example embodiment. The analyzing processing is processing for analyzing a video that is shot by the imaging apparatus 121_1 to 121_K. The analyzing processing is repeatedly performed, for example, during the operation of the imaging apparatuses 121_1 to 121_K and the analyzing unit 123.

The analyzing unit 123 acquires video information 124a_1 to 124a_K from each of the imaging apparatuses 121_1 to 121_K, for example, in real time via the communication network N (step S201).

The analyzing unit 123 causes the analyzing result storage unit 124 to store the plurality of pieces of video information 124a_1 to 124a_K acquired at step S201 and analyzes a video included in the plurality of pieces of video information 124a_1 to 124a_K (step S202).

For example, as described above, the analyzing unit 123 analyzes frame images included in each video by using a plurality of types of engines in order to detect a detection target. In addition, the analyzing unit 123 uses each type of engine in order to compute the appearance feature value of the detected detection target and the reliability of the appearance feature value. The analyzing unit 123 generates analyzing information 124b by performing such analyzing.

The analyzing unit 123 causes the analyzing storage unit 124 to store the analyzing information 124b generated by performing the analyzing at step S202, as well as, transmits the information to the video analysis apparatus 100 via the communication network N (step S203). At this time, the analyzing unit 123 may transmit the video information 124a_1 to 124a_K acquired at step S201 to the video analysis apparatus 100 via the communication network N.

The receiving unit 109 receives the analyzing information 124b transmitted at step S203 via the communication network N (step S204). At this time, the receiving unit 109 may receive the video information 124a_1 to 124a_K transmitted at step S203 via the communication network N.

The receiving unit 109 causes the storage unit 108 to store the analyzing information 124b received at step S204 (step S205), then, ends the analyzing processing. At this time, the receiving unit 109 may receive the video information 124a_1 to 124a_K transmitted at step S204 via the communication network N.

### (Video analysis processing)

The video analysis processing is processing for integrating the results of analyzing videos, as described with reference to Fig. 3. The video analysis processing is activated, for example, when a user logs in, and the display control unit 113 causes the display unit 114 to display a start screen 131. The start screen 131 is a screen for accepting specification by a user.

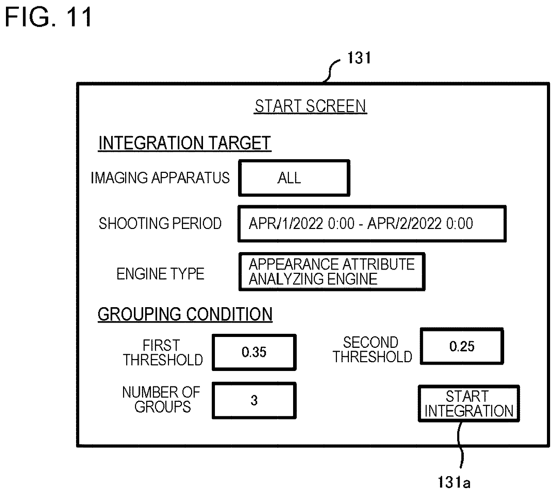

Fig. 11 illustrates an example of the start screen 131 according to the present example embodiment. The start screen 131 illustrated in Fig. 11 includes input fields for specifying or selecting an imaging apparatus and shooting period associated with an integration target, a type of engine, and a first threshold, second threshold, and the number of groups associated with a grouping condition.

Fig. 11 illustrates an example in which "all" of the imaging apparatuses 121_1 to 121_K has been inputted in an input field associated with the "imaging apparatus." In this input field, for example, the imaging apparatus ID of one or a plurality of the imaging apparatuses 121_1 to 121_K among the imaging apparatuses 121_1 to 121_K may be inputted.

Fig. 11 illustrates an example in which "APR/1/2022 0:00 - APR/2/2022 0:00" has been inputted in an input field associated with the "shooting period." An appropriate period may be inputted in this input field.

Fig. 11 illustrates an example in which "appearance attribute analyzing engine" has been inputted in an input field associated with the "engine type." The type of engine used for computing the appearance feature value may be inputted in this input field. In addition, a plurality of types of engines used for computing the appearance feature value may be inputted in this input field.

Fig. 11 illustrates an example in which "0.35," "0.25," and "3" have been inputted in the input fields associated with the "first threshold," "second threshold," and "number of groups," respectively. In these input fields, for example, grouping conditions associated with the user identification information of the logged-in user may be set as initial values, which may be changed by the user as necessary.

When a user presses a start integration button 131a, the video analysis apparatus 100 starts the video analysis processing illustrated in Fig. 3.

As described with reference to Fig. 3, the type receiving unit 110 accepts a selection of the type of engine for analyzing a video in order to detect a detection target included in the video (step S101).

At this time, the type receiving unit 110 receives the information specified in the start screen 131 in addition to the type of engine. This information is, for example, information for specifying an imaging apparatus, a shooting period, a first threshold, a second threshold, and the number of groups, as described with reference to Fig. 11.

As described above, the acquiring unit 111 acquires results of analyzing each of the plurality of videos by using the type of engine selected at step S101 (step S102).

Specifically, for example, the acquiring unit 111 acquires, from the storage unit 108, analyzing information 124b for a plurality of videos to be integrated, based on the engine type indicating the selected type of engine, the specified imaging apparatus ID, and the shooting period. Here, the acquiring unit 111 acquires, from the storage unit 108, the analyzing information 124b including the engine type indicating the selected type of engine, the specified imaging apparatus ID, and the shooting time within the specified shooting period.

The integration unit 112 integrates the results acquired at step S102 (step S103). In other words, the analyzing information 124b acquired at step S102 is integrated.

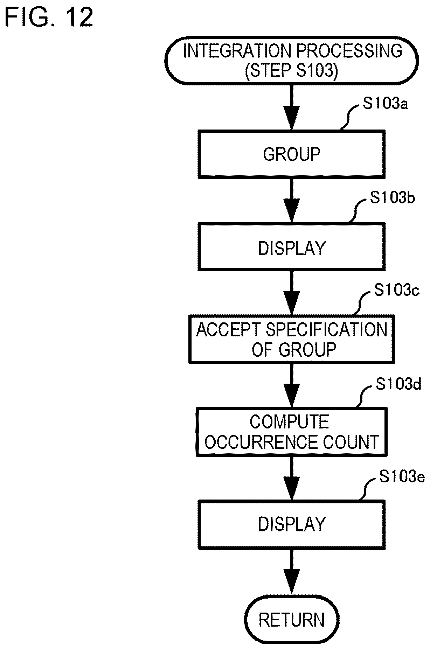

Fig. 12 is a flowchart illustrating a detailed example of integration processing (step S103) according to the present example embodiment.

The grouping unit 112a groups detection targets included in the plurality of videos based on the similarity of the appearance feature values included in the analyzing information 124b acquired at step S102 (step S103a). In this way, the grouping unit 112a generates integration information 108a and causes the storage unit 108 to store the information.

The display control unit 113 causes the display unit 114 to display the result of grouping at step S103a (step S103b).

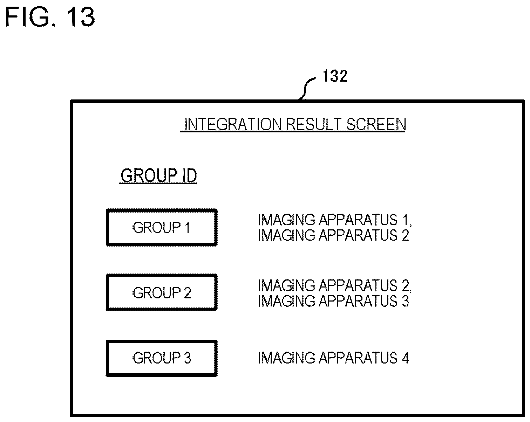

Fig. 13 is a diagram illustrating an example of the integration result screen 132 that is a screen indicating the result of grouping. The integration result screen 132 displays, for each group, a list of imaging apparatus IDs of the imaging apparatuses 121_1 to 121_K that shot videos in which a detection target belonging to the group has been detected.

In the example illustrated in Fig. 13, Group 1, Group 2, and Group 3 indicate the group IDs of the three groups according to the specification of the number of groups. In the example illustrated in Fig. 13, the imaging apparatus IDs "imaging apparatus 1" and "imaging apparatus 2" related to the imaging apparatuses 121_1 to 121_2 are associated with Group 1. The imaging apparatus IDs "imaging apparatus 2" and "imaging apparatus 3" related to the imaging apparatuses 121_2 and 121_3 are associated with Group 2. The imaging apparatus ID "imaging apparatus 4" related to the imaging apparatus 121_4 is associated with Group 3.

Note that the integration result screen 132 is not limited thereto, and may display, for example, for each group, a list of video IDs of videos in which a detection target belonging to the group has been detected.

The statistical processing unit 112b accepts a specification of a group (step S103c).

For example, each of "Group 1," "Group 2," and "Group 3" of the integration result screen 132 illustrated in Fig. 13 is selectable. When a user selects any one of "Group 1," "Group 2," and "Group 3," the statistical processing unit 112b accepts the specification of the group.

The statistical processing unit 112b counts the number of times a detection target belonging to a group specified at step S103c is included in order to compute the number of occurrences of the detection target belonging to the group (step S103d).

Specifically, for example, the statistical processing unit 112b counts the number of times a detection target (a detection target ID) belonging to a group specified at step S103c is included in the analyzing information 124b acquired at step S102. This makes it possible to count the number of times a detection target belonging to a group specified by a user is included in a plurality of videos shot by a specified imaging apparatus 121_1 to 121_K during a specified shooting period.

The statistical processing unit 112b computes the number of times a detection target (a detection target ID) belonging to the specified group is included in the entire analyzing information 124b acquired at step S102 in order to compute the total number of occurrences.

The statistical processing unit 112b divides the analyzing information 124b acquired at step S102 for each time range based on the shooting time included in the analyzing information 124b. The statistical processing unit 112b counts the number of times a detection target (a detection target ID) belonging to the specified group is included in the analyzing information 124b that has been divided for each time range in order to compute the number of occurrences by time range.

The statistical processing unit 112b may also count the number of times a detection target (a detection target ID) belonging to the specified group is included in the entire analyzing information 124b for each imaging apparatus ID in order to compute the total number of occurrences by imaging apparatus. Alternatively, the statistical processing unit 112b may count the number of times a detection target (a detection target ID) belonging to the specified group is included in the analyzing information 124b for each time range and imaging apparatus ID in order to compute the number of occurrences by time range and by imaging apparatus.

The display control unit 113 causes the display unit 114 to display the number of occurrences determined at step S103d (step S103e), then, ends the video analysis processing (refer to Fig. 3).

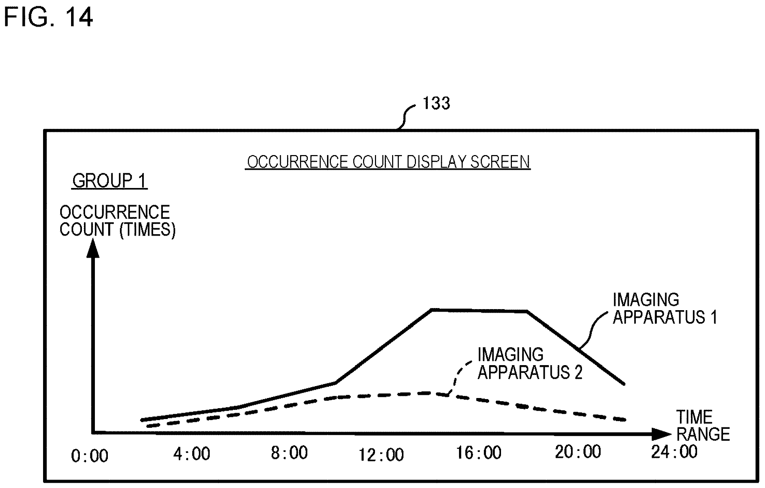

Fig. 14 is a diagram illustrating an example of an occurrence count display screen 133 that is a screen indicating the number of occurrences. The occurrence count display screen 133 illustrated in Fig. 14 is an example of a screen indicating the number of occurrences by time range and by imaging apparatus for Group 1 as a line graph.

For example, a time indicating each time range may be selectable, and, when a time range is specified by the selection, the display control unit 113 may cause the display unit 114 to display one or a plurality of videos shot during the specified time range. Specifically, for example, the display control unit 113 may specify a video ID related to a video including a group of frame images shot during the specified time range based on the shooting time included in the analyzing information 124b acquired at step S102. The display control unit 113 may cause the display unit 114 to display an image associated with the determined video ID based on the video information 124a_1 to 124a_K.

Note that the occurrence count display screen 133 is not limited to a line graph, and the number of occurrences may be expressed by using a pie chart, a bar chart, and/or the like.

By executing the video analysis processing, detection targets included in a plurality of videos can be grouped based on the appearance feature values being computed by using a selected type of engine. This makes it possible to group detection targets with similar appearance features.

Also, a user can confirm the result of grouping by referring to the integration result screen 132. Further, a user can confirm the number of occurrences of a detection target classified based on the appearance feature value by referring to the occurrence count display screen 133. This makes it possible for a user to know the tendency of the occurrence of a detection target with a similar appearance feature, such as, when, where, and to what extent the detection target having a similar appearance feature occurs.

### (Operation and Effect)

According to the present example embodiment, the video analysis apparatus 100 includes a type receiving unit 110, an acquiring unit 111, and an integration unit 112. The type receiving unit 110 accepts a selection of the type of engine for analyzing each of a plurality of videos in order to detect a detection target included in each of the plurality of videos. The acquiring unit 111 acquires results of analyzing the plurality of videos by using the selected type of engine among results of analyzing the plurality of videos by using a plurality of types of the engines. The integration unit 112 integrates the acquired results of analyzing the plurality of videos.

This makes it possible to acquire information that integrates the results of analyzing a plurality of videos by using a selected type of engine. Therefore, it is possible to utilize the results of analyzing a plurality of videos.

According to the present example embodiment, the selection of the type of engine is carried out by selecting a result of analyzing the plurality of videos.

This makes it possible to acquire information that integrates the results of analyzing a plurality of videos by using a selected type of engine. Therefore, it is possible to utilize the results of analyzing a plurality of videos.

According to the present example embodiment, the integration unit 112 integrates the results of analyzing a plurality of videos by using the same type of engine.

This makes it possible to acquire information that integrates the results of analyzing a plurality of videos by using a selected type of engine. Therefore, it is possible to utilize the results of analyzing a plurality of videos.

According to the present example embodiment, the result of analyzing a plurality of videos includes the appearance feature value of a detection target included in each of the plurality of videos. The integration unit 112 groups the detection target included in the plurality of videos based on the similarity of the appearance feature value of the detection target and generates integration information 108a that associates the detection target with a group to which the detection target belongs.

This makes it possible to acquire integration information 108a as a result of integrating the results of analyzing a plurality of videos by using a selected type of engine. Therefore, it is possible to utilize the results of analyzing a plurality of videos.

According to the present example embodiment, the integration unit 112 groups detection targets included in a plurality of videos based on a grouping condition for grouping the detection targets.

This makes it possible to group detection targets by using a grouping condition. Therefore, it is possible to utilize the results of analyzing a plurality of videos.

According to the present example embodiment, the grouping condition includes at least one of a first threshold related to the reliability of an appearance feature value, a second threshold related to the similarity of an appearance feature value, and the number of groups.

This makes it possible to group detection targets based on at least one of a first threshold, a second threshold, and the number of groups. Therefore, it is possible to utilize the results of analyzing a plurality of videos.

According to the present example embodiment, the integration unit 112 groups detection targets included in a plurality of videos based on a grouping condition determined for each user.

This makes it possible to group detection targets by using a grouping condition suitable for a user. Therefore, it is possible to utilize the results of analyzing a plurality of videos.

According to the present example embodiment, the result of analyzing a plurality of videos further includes imaging identification information for identifying the imaging apparatus 121_1 to 121_K that shot a video including a detection target. The integration information 108a further associates the imaging identification information.

This makes it possible to analyze the integration information 108a for each imaging apparatus. Therefore, it is possible to utilize the results of analyzing a plurality of videos.

According to the present example embodiment, the integration unit 112 further counts the number of times a detection target is included in a plurality of videos in order to compute the number of occurrences of the detection target.

This makes it possible to acquire the number of occurrences of a detection target as a result of integrating the results of analyzing a plurality of videos by using a selected type of engine. Therefore, it is possible to utilize the results of analyzing a plurality of videos.

According to the present example embodiment, the result of analyzing a plurality of videos further includes a shooting time during which a video including a detection target is shot. The integration unit 112 further counts the number of times a detection target is included in a plurality of videos for each time range in which the videos are shot to compute the number of occurrences of the detection target by time range.

This makes it possible to acquire the number of occurrences of the detection target by time range as a result of integrating the results of analyzing a plurality of videos by using a selected type of engine. Therefore, it is possible to utilize the results of analyzing a plurality of videos.

According to the present example embodiment, the video analysis apparatus 100 further includes a display control unit 113 that causes a display unit 114 to display the integration result.

This makes it possible for a user to know a result of integrating the results of analyzing a plurality of videos by using the selected type of engine by viewing the display unit 114. Therefore, it is possible to utilize the results of analyzing a plurality of videos.

According to the present example embodiment, when a time range is specified, the display control unit 113 causes the display unit 114 to display one or a plurality of videos being shot during the specified time range.

This makes it possible for a user to easily view a video that is used for acquiring the analyzing result as necessary. Therefore, it is possible to utilize the results of analyzing a plurality of videos.

According to the present example embodiment, the plurality of videos are videos being shot by using a plurality of imaging apparatuses 121_1 to 121_K.

This makes it possible to utilize the results of analyzing a plurality of videos being shot at different locations.

According to the present example embodiment, the plurality of videos are videos that are related locally or temporally.

This makes it possible to utilize the results of analyzing a plurality of videos that are related locally or temporally.

According to the present example embodiment, the plurality of videos are videos acquired by shooting the same shooting area at different times within a predetermined period of time or videos acquired by shooting a plurality of shooting areas within a predetermined range at different times within the same or predetermined period of time.

This makes it possible to utilize the results of analyzing a plurality of videos that are related locally or temporally.

While the invention has been particularly shown and described with reference to exemplary embodiment thereof, the invention is not limited to the embodiment. It will be understood by those of ordinary skill in the art that various changes in form and details may be made therein without departing from the spirit and scope of the present invention as defined by the claims.

Although a plurality of steps (processes) have been described sequentially in the plurality of flowcharts used in the above descriptions, the execution order of the steps carried out in the example embodiment is not limited to the order in which the steps have been described. In the example embodiment, the order of the illustrated steps can be changed to an extent that does not hinder the content. In addition, the above-described example embodiment and variations can be combined to the extent that does not conflict the content.

Part or all of the above example embodiment may also be described as in the following supplementary notes, but are not limited to:

### (Supplementary Note 1)

A video analysis apparatus including:
a type receiving means for accepting selection of a type of engine in order to analyze each of a plurality of videos and detect a detection target included in each of the plurality of videos;
an acquiring means for acquiring results of analyzing the plurality of videos by using the selected type of the engine among results of analyzing the plurality of videos by using a plurality of types of the engines; and
an integration means for integrating the acquired results of analyzing the plurality of videos.

### (Supplementary Note 2)

The video analysis apparatus according to supplementary note 1, wherein
selection of a type of the engine is carried out by selecting a result of analyzing each of the plurality of videos.

### (Supplementary Note 3)

The video analysis apparatus according to supplementary note 1 or 2, wherein
the integration means integrates results of analyzing the plurality of videos by the same type of the engine.

### (Supplementary Note 4)

The video analysis apparatus according to any one of supplementary notes 1 to 3 wherein
the result of analyzing the plurality of videos includes an appearance feature value of a detection target included in the plurality of videos, and
the integration means groups the detection target included in the plurality of videos, based on a similarity of an appearance feature value of the detection target and generates integration information that associates the detection target with a group to which the detection target belongs.

### (Supplementary Note 5)

The video analysis apparatus according to supplementary note 4, wherein
the integration means further groups the detection target included in the plurality of videos, based on a grouping condition for grouping the detection target.

### (Supplementary Note 6)

The video analysis apparatus according to supplementary note 5, wherein
the grouping condition includes at least one of a first threshold related to a reliability of the appearance feature value, a second threshold related to a similarity of the appearance feature value, and the number of groups.

### (Supplementary Note 7)

The video analysis apparatus according to supplementary note 5 or 6, wherein
the integration means groups the detection target included in the plurality of images, based on the grouping condition determined for each user.

### (Supplementary Note 8)

The video analysis apparatus according to any one of supplementary notes 4 to 7, wherein
the result of analyzing the plurality of videos further includes imaging identification information for identifying an imaging apparatus shooting the video including the detection target, and
the integration information further associates the imaging identification information. (Supplementary Note 9)

The video analysis apparatus according to any one of supplementary notes 1 to 8, wherein the integration means further counts the number of the detection targets included in the plurality of videos and computes the number of occurrences of the detection target.

### (Supplementary Note 10)

The video analysis apparatus according to supplementary note 9, wherein
the result of analyzing the plurality of videos further includes a shooting time during which the video including the detection target is shot, and
the integration means further counts the number of the detection targets included in the plurality of videos for each time range in which each of the plurality of videos is shot, and computes the number of occurrences of the detection target for each time range.

### (Supplementary Note 11)

The video analysis apparatus according to any one of supplementary notes 1 to 10, further including
a display control means for causing a display means to display the integration result.

### (Supplementary Note 12)

The video analysis apparatus according to supplementary note 11, wherein,
when a time range is specified, the display control means causes the display means to display one or a plurality of videos being shot during the specified time range.

### (Supplementary Note 13)

The video analysis apparatus according to any one of supplementary notes 1 to 12, wherein
the plurality of videos are videos being shot by using a plurality of imaging apparatuses.

### (Supplementary Note 14)

The video analysis apparatus according to supplementary note 13, wherein
the plurality of videos are videos that are related locally or temporally.

### (Supplementary Note 15)

The video analysis apparatus according to supplementary note 13 or 14, wherein
the plurality of videos are videos acquired by shooting the same shooting area at different times within a predetermined period of time, or videos acquired by shooting a plurality of shooting areas within a predetermined range at different times within the same or a predetermined period of time.

### (Supplementary Note 16)

A video analysis system including:
the video analysis apparatus according to any one of supplementary notes 1 to 15;
a plurality of imaging apparatuses for shooting the plurality of videos; and
an analyzing apparatus that analyzes each of the plurality of videos by using a plurality of types of the engines.

### (Supplementary Note 17)

A video analysis method including, by a computer:
accepting selection of a type of engine in order to analyze each of a plurality of videos and detect a detection target included in each of the plurality of videos;
acquiring results of analyzing the plurality of videos by using the selected type of the engine among results of analyzing the plurality of videos by using a plurality of types of the engines; and
integrating the acquired results of analyzing the plurality of videos.

### (Supplementary Note 18)

A program for causing a computer to perform:
accepting selection of a type of engine in order to analyze each of a plurality of videos and detect a detection target included in each of the plurality of videos;
acquiring results of analyzing the plurality of videos by using the selected type of the engine among results of analyzing the plurality of videos by using a plurality of types the of engines; and
integrating the acquired results of analyzing the plurality of videos.

### (Supplementary Note 19)

A storage medium that records a program for causing a computer to execute:
accepting selection of a type of engine in order to analyze each of a plurality of videos and detect a detection target included in the plurality of videos;
acquiring results of analyzing the plurality of videos by using the selected type of the engine among results of analyzing the plurality of videos by using a plurality of types of the engines; and
integrating the acquired results of analyzing the plurality of videos.

## Claims

1. A video analysis apparatus comprising:
type receiving means for accepting selection of a type of engine in order to analyze each of a plurality of videos and detect a detection target included in each of the plurality of videos;
acquiring means for acquiring results of analyzing the plurality of videos by using the selected type of the engine among results of analyzing the plurality of videos by using a plurality of types of the engines; and
integration means for integrating the acquired results of analyzing the plurality of videos.

2. The video analysis apparatus according to claim 1, wherein
selection of a type of the engine is carried out by selecting a result of analyzing each of the plurality of videos.

3. The video analysis apparatus according to claim 1, wherein
the integration means integrates results of analyzing the plurality of videos by the same type of the engine.

4. The video analysis apparatus according to any one of claims 1 to 3, wherein
the result of analyzing the plurality of videos includes an appearance feature value of a detection target included in each of the plurality of videos, and
the integration means groups the detection target included in the plurality of videos, based on a similarity of an appearance feature value of the detection target, and generates integration information that associates the detection target with a group to which the detection target belongs.

5. The video analysis apparatus according to claim 4, wherein
the integration means further groups the detection target included in the plurality of videos, based on a grouping condition for grouping the detection target.

6. The video analysis apparatus according to claim 4, wherein
the result of analyzing the plurality of videos further includes imaging identification information for identifying an imaging apparatus shooting the video including the detection target, and
the integration information further associates the imaging identification information.

7. The video analysis apparatus according to claim 4, wherein
the integration means further counts a number of the detection targets included in the plurality of videos and computes a number of occurrences of the detection target.

8. The video analysis apparatus according to claim 7, wherein
the result of analyzing the plurality of videos further includes a shooting time during which the video including the detection target is shot, and
the integration means further counts a number of the detection targets included in the plurality of videos for each time range in which each of the plurality of videos is shot, and computes a number of occurrences of the detection target for each time range.

9. A video analysis method including, by a computer:
accepting selection of a type of engine in order to analyze each of a plurality of videos and detect a detection target included in each of the plurality of videos;
acquiring results of analyzing the plurality of videos by using the selected type of the engine among results of analyzing the plurality of videos by using a plurality of types of the engines; and
integrating the acquired results of analyzing the plurality of videos.

10. A program for causing a computer to perform:
accepting selection of a type of engine in order to analyze each of a plurality of videos and detect a detection target included in each of the plurality of videos;
acquiring results of analyzing the plurality of videos by using the selected type of the engine among results of analyzing the plurality of videos by using a plurality of types of the engines; and
integrating the acquired results of analyzing the plurality of videos.
